# EUROPEAN PATENT APPLICATION

(11) **EP 4 538 156 A1**
(43) Date of publication of application: **16.04.2025**
(21) Application number: 24203521.0
(22) Date of filing: 30.09.2024
(51) Int. Cl.: B62J 45/00

(54) **STRADDLED VEHICLE**

(30) Priority: 06.10.2023 JP 2023174482
(71) Applicant: Yamaha Hatsudoki Kabushiki Kaisha, Iwata-shi, Shizuoka 438-8501 (JP)
(72) Inventor: NOHARA, Takahiro, Iwata-shi, 4388501 (JP)
(74) Representative: Studio Torta S.p.A.

(57) **Abstract**

There is disclosed a straddled vehicle (1) including a USB terminal unit (41), a first support portion (74), an attachment member (42) and a front cowling (22).; first support portion (74) being shaped along a first predetermined direction and supporting the USB terminal unit (41); attachment member (42) including a first insertion portion (62) that inserts the first support portion (74) thereto along the first predetermined direction; attachment member (42) being disposed in the surroundings of the USB terminal unit (41) and attaching USB terminal unit (41) to first support portion (74); front cowling (22) being disposed away from an end (54a) of the USB terminal unit (41) at a predetermined interval (L2) in a second predetermined direction oriented opposite to first predetermined direction; the predetermined interval (L2) being shorter than a length (L1) from a first predetermined directional end (62e) of the first insertion portion (62) to a second predetermined directional end (74e) of the first support portion (74).

## Description

### Technical field

The present invention relates to a straddled vehicle.

### Prior Art

There has been disclosed a straddled vehicle configured to be provided with a USB (Universal Serial Bus) port for connection with an external device such as a smart phone (e.g., Japan Laid-open Patent Application Publication No. 2019-172162). In the straddled vehicle described in Japan Laid-open Patent Application Publication No. 2019-172162, the USB port is provided in a user-friendly position in the surroundings of a handle.

### Description of the invention

However, when disposed in the user-friendly place, a USB terminal unit provided with the USB port has chances of being stolen.

On the other hand, the USB terminal unit has been made inconvenient by taking such an anti-theft countermeasure that the USB terminal unit is configured to be exposed to the outside by a key and/or so forth or that the USB terminal unit is disposed inside a member fastened in place by screws.

It is an object of the present invention to provide a straddled vehicle that a terminal unit is enabled to be disposed in a user-friendly state, while theft thereof is inhibited.

A straddled vehicle according to an aspect of the present invention includes a terminal unit, a support portion, an attachment member, and an equipment member. The terminal unit enables a terminal of a cable for charging or communication to be connected thereto. The support portion is shaped along a first predetermined direction and supports the terminal unit. The attachment member includes an insertion portion to which the support portion is inserted along the first predetermined direction; besides, the attachment member is disposed in surroundings of the terminal unit and attaches the terminal unit to the support portion. The equipment member is disposed away from an end of the terminal unit at a predetermined interval in a second predetermined direction oriented opposite to the first predetermined direction. The predetermined interval is shorter than a length from a first predetermined directional end of the insertion portion to a second predetermined directional end of the support portion.

In the straddled vehicle according to the present aspect, when the terminal unit is moved in the second predetermined direction, the end of the terminal unit is contacted to the equipment member before the insertion portion is pulled out from the support portion, whereby the terminal unit is prevented from being pulled out from the support portion. Because of this, theft of the terminal unit can be inhibited. Besides, theft of the terminal unit can be inhibited without necessity of using a key and/or so forth; hence, the terminal unit is made easily usable by a user. Moreover, installation of the terminal unit is enabled only by inserting the support portion to the insertion portion of the attachment member; hence, the terminal unit is enabled to be disposed in a user-friendly place.

The equipment member may be an exterior cover. In this case, when the terminal unit is moved in the second predetermined direction, the end of the terminal unit is contacted to the exterior cover attached to a vehicle body frame before the insertion portion is pulled out from the support portion, whereby the terminal unit can be prevented from being pulled out from the support portion.

The terminal unit may be disposed such that a port thereof, enabling the terminal of the cable to be connected thereto, faces a rearward direction. The end of the terminal unit may be an end thereof facing a forward direction. The exterior cover may be a front cowling. The first predetermined direction may be the rearward direction, whereas the second predetermined direction may be the forward direction. In this case, when the terminal unit is moved in the forward direction, the end of the terminal unit is contacted to the front cowling before the insertion portion is pulled out from the support portion, whereby the terminal unit can be prevented from being pulled out from the support portion.

The terminal unit may be a USB terminal unit. The terminal unit may include a USB port enabling the terminal of the cable to be connected thereto. In this case, the USB port can be inhibited from being pulled out for theft from the support portion.

The straddled vehicle may further include a connecting component. The connecting component may be connected to the end of the terminal unit and may interfere with the attachment member when the terminal unit is moved in the first predetermined direction with respect to the attachment member. In this case, when the terminal unit is moved in the first predetermined direction with respect to the attachment member, the connecting component interferes with the attachment member; hence, it is made difficult to detach the terminal unit from the attachment member, whereby theft of the terminal unit can be inhibited.

The connecting component may include a connector and a lead wire. The connector may be connected to the end of the terminal unit. The lead wire may be connected to the connector. The connector and the lead wire may be bundled by a bundling member. The lead wire may interfere in part with the attachment member when the terminal unit is moved in the first predetermined direction with respect to the attachment member. In this case, when the lead wire, bundled with the connector, interferes with the attachment member, it is made difficult to detach the terminal unit from the attachment member, whereby theft of the terminal unit can be inhibited.

The support portion may include a restriction portion restricting the attachment member from moving in the first predetermined direction. In this case, when the attachment member is moved in the first predetermined direction, the movement of the attachment member is restricted by the restriction portion; hence, it is made difficult to detach the attachment member including the terminal unit disposed therein, whereby theft of the terminal unit can be inhibited.

The straddled vehicle may further include a handle, a seat, and a fuel tank. The seat may be disposed on a rearward side of the handle. The fuel tank may be disposed between the seat and the handle. The terminal unit may be disposed on a forward side of the handle when the handle is not being steered. In this case, when the straddled vehicle is of a type configured such that the fuel tank is disposed between the handle and the seat, for instance, of an MC-type, the terminal unit is enabled to be disposed in a user-friendly state, while theft thereof can be inhibited.

The terminal unit may include a port enabling the terminal of the cable to be connected thereto. The straddled vehicle may further include a cover member. The cover member may be disposed in opposition to the equipment member; besides, the cover member may be disposed to cover the terminal unit from a port side, while being attachable to and detachable from a vehicle body frame. In this case, when the cover member is detached from the vehicle body frame, the terminal unit is exposed to the outside, whereby the terminal of the cable is made connectable to the port of the terminal unit. It should be noted that the cover member is not only directly attachable to and detachable from the vehicle body frame but also is indirectly attachable thereto and detachable therefrom through another member.

The straddled vehicle may further include an eave portion. The eave portion may be disposed on an upper side of the attachment member. The eave portion may be curved along an upper surface of the attachment member. In this case, with the eave portion being provided, it is made difficult to insert a hand into a place that the terminal unit is disposed, whereby theft of the terminal unit can be inhibited.

The attachment member may further include an attachment member body and a protruding portion. The attachment member body may be provided such that the insertion portion is disposed outside thereof and may enclose the terminal unit from the surroundings of the terminal unit. The protruding portion may protrude upward, while being disposed on a first predetermined directional end of the attachment member body. In this case, when it rains, for instance, the protruding portion can inhibit water from flowing down onto a cable-connected part of the terminal unit.

Overall, according to the present invention, when the terminal unit is moved in the second predetermined direction, the end of the terminal unit is contacted to the equipment member before the insertion portion is pulled out from the support portion, whereby the terminal unit can be prevented from being pulled out from the support portion. Because of this, theft of the terminal unit can be inhibited. Besides, theft of the terminal unit can be inhibited without necessity of using a key and/or so forth; hence, the terminal unit is made easily usable by a user. Moreover, installation of the terminal unit is enabled only by inserting the support portion into the insertion portion of the attachment member; hence, the terminal unit is enabled to be disposed in a user-friendly place.

### Brief description of the drawings

FIG. 1 is a side view of a straddled vehicle according to a preferred embodiment.
FIG. 2 is a plan view of the straddled vehicle.
FIG. 3 is a view of a handle and the vicinity thereof seen from a rearward side of the straddled vehicle.
FIG. 4 is a perspective view of a main frame and constituent elements of a front frame and the vicinity thereof in the straddled vehicle.
FIG. 5 is a close-up view of the front frame and the vicinity thereof in FIG. 4.
FIG. 6 is a view of a handle member and the vicinity thereof in a condition that an inside lower right cover is detached from the straddled vehicle.
FIG. 7A is a cross-sectional view taken along arrow AA' in FIG. 6.
FIG. 7B is a cross-sectional view taken along arrow BB' in FIG. 7A.
FIG. 8A is a close-up view of a USB terminal unit and the vicinity thereof in the straddled vehicle.
FIG. 8B is a perspective view of a condition that an inside upper cover is detached from FIG. 8A.
FIG. 9 is composed of diagram (a) provided as a perspective view of the USB terminal unit seen from the rearward side of the straddled vehicle and diagram (b) provided as a perspective view of the USB terminal unit seen from a forward side of the straddled vehicle.
FIG. 10A is a perspective view of the USB terminal unit, a support frame, and an attachment member seen from a right lateral side.
FIG. 10B is a perspective view of the USB terminal unit, the support frame, and the attachment member seen from a left lateral side.
FIG. 10C is a perspective view of the USB terminal unit, the support frame, and the attachment member seen from left below.
FIG. 11 is an exploded perspective view of the USB terminal unit and the attachment member.
FIG. 12 is composed of diagram (a) provided as a perspective view of the attachment member seen from the forward side of the straddled vehicle and diagram (b) provided as an elevation view of the attachment member seen from the rearward side of the straddled vehicle.
FIG. 13 is a perspective view of the support frame in the straddled vehicle.
FIG. 14 is composed of diagrams (a) to (c) for explaining a procedure for attachment of the USB terminal unit.

### Embodiments of the invention

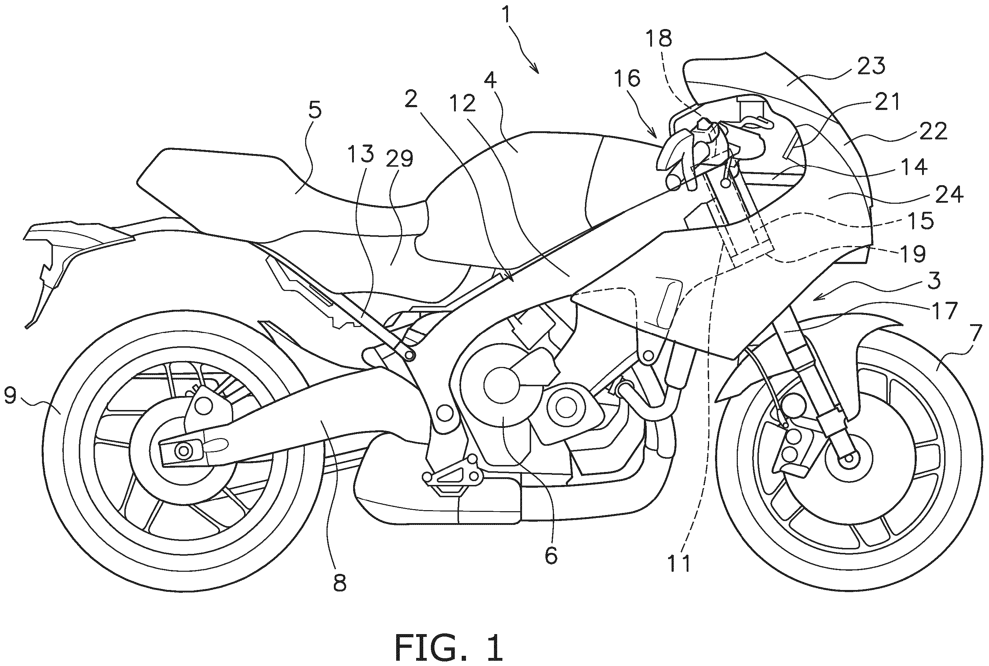

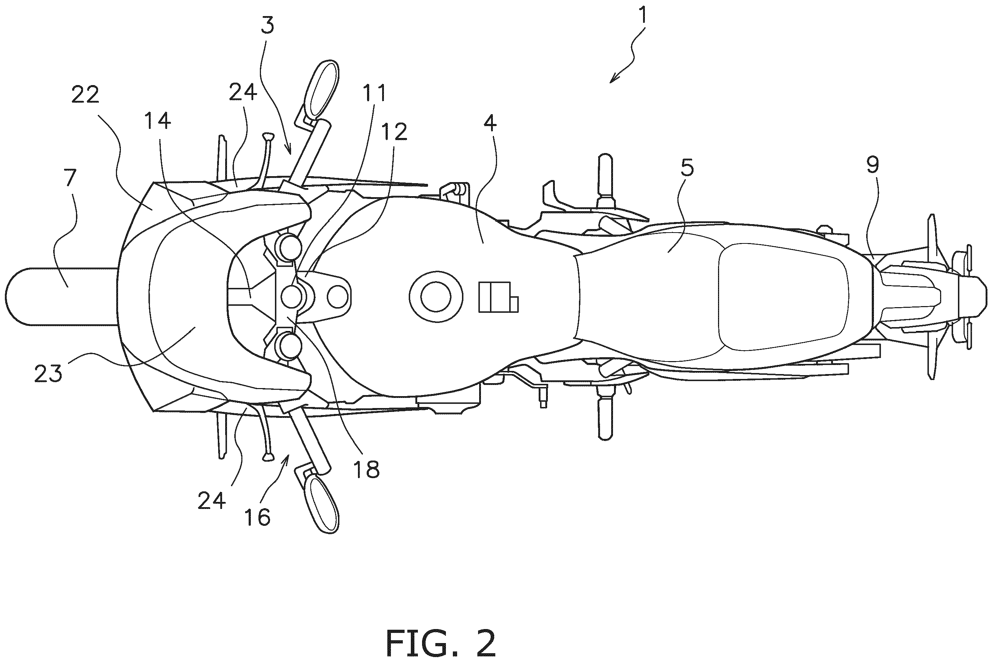

A straddled vehicle according to a preferred embodiment will be hereinafter explained with reference to drawings. FIG. 1 is a side view of a straddled vehicle 1 according to the preferred embodiment. FIG. 2 is a plan view of the straddled vehicle 1 according to the preferred embodiment.

As shown in FIG. 1, the straddled vehicle 1 includes a vehicle body frame 2, a steering device 3, a fuel tank 4, a seat 5, a power unit 6, a front wheel 7, a swing arm 8, and a rear wheel 9.

The vehicle body frame 2 includes a head pipe 11, a main frame 12, a rear frame 13, and a front frame 14. The main frame 12 is connected to the head pipe 11. The main frame 12 extends rearward from the head pipe 11.

The rear frame 13 is connected to the main frame 12. The rear frame 13 extends rearward from the main frame 12. The rear frame 13 is disposed below the seat 5. The front frame 14 is connected to the head pipe 11. The front frame 14 is disposed on the front side of the head pipe 11.

It should be noted that in the present preferred embodiment, the directional terms "front", "rear", "right", "left", "up", and "down" are defined as meaning front, rear, right, left, up, and down directions seen from a rider seated on the seat 5.

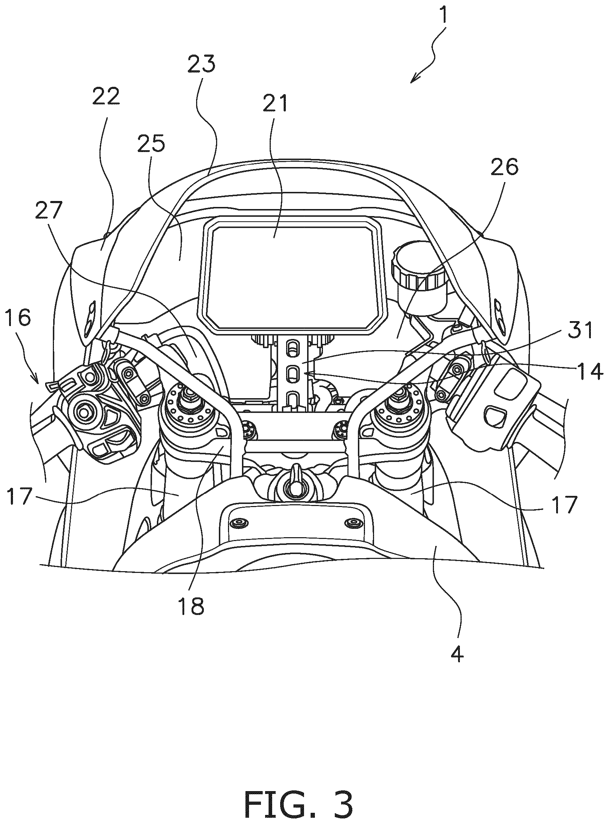

The steering device 3 is supported by the head pipe 11, while being turnable. The steering device 3 supports the front wheel 7 such that the front wheel 7 is made rotatable. The steering device 3 includes a steering shaft 15, a handle member 16, a front fork 17, an upper bracket 18, and a lower bracket 19. The steering shaft 15 is inserted into the head pipe 11. The handle member 16 is disposed further on the upper side than the head pipe 11. FIG. 3 is a view of the handle member 16 and the vicinity thereof seem from behind. The handle member 16 extends in the right-and-left direction.

A meter unit 21 is disposed in front of the handle member 16. The meter unit 21 is fixed to the front frame 14. The meter unit 21 includes, for instance, a tachometer. The front fork 17 is connected to the steering shaft 15 through the upper bracket 18 and the lower bracket 19. The front fork 17 supports the front wheel 7 such that the front wheel 7 is made rotatable.

The fuel tank 4 is disposed behind the head pipe 11. The fuel tank 4 is supported by the main frame 12. The seat 5 is disposed behind the fuel tank 4. The fuel tank 4 is disposed between the handle member 16 and the seat 5.

The power unit 6 is disposed below the fuel tank 4. The power unit 6 is supported by the main frame 12. The power unit 6 includes, for instance, an internal combustion engine. The rear wheel 9 is supported by the main frame 12 through the swing arm 8. The rear wheel 9 is supported by the swing arm 8, while being rotatable. The swing arm 8 is supported by the main frame 12, while being swingable.

The straddled vehicle 1 includes a front cowling 22 (exemplary equipment member and exemplary exterior cover). The front cowling 22 is disposed in front of and on both lateral sides of the head pipe 11. The front cowling 22 is fixed to the front frame 14. A wind shield 23 is disposed above the front cowling 22.

The straddled vehicle 1 includes a pair of right and left side cowlings 24. The side cowlings 24 are coupled to the rear side of the right and left parts of the front cowling 22. The side cowlings 24 are fixed to the main frame 12. The side cowlings 24 cover part of the front fork 17 from right and left.

The straddled vehicle 1 includes a pair of right and left vehicle body covers 29 (see FIG. 1). The vehicle body covers 29 are disposed below the seat 5. The pair of vehicle body covers 29 covers the rear frame 13 from a right lateral side and a left lateral side.

As shown in FIG. 3, the straddled vehicle 1 includes an inside upper cover 25, an inside lower right cover 26, and an inside lower left cover 27 (exemplary cover member). The inside upper cover 25, the inside lower right cover 26, and the inside lower left cover 27 are disposed on the rear side of the front cowling 22. When the handle member 16 is not being steered, the inside upper cover 25, the inside lower right cover 26, and the inside lower left cover 27 are disposed on the front side of the handle member 16.

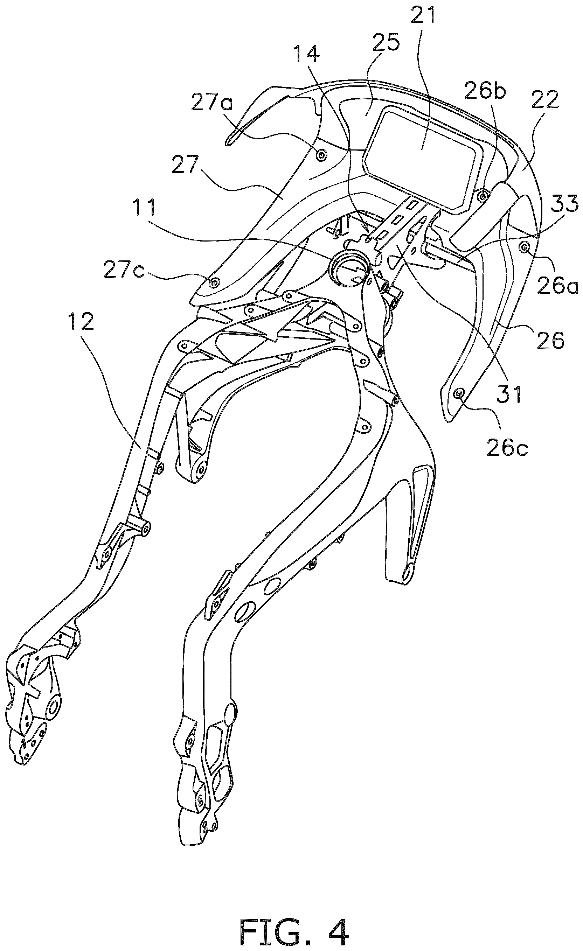

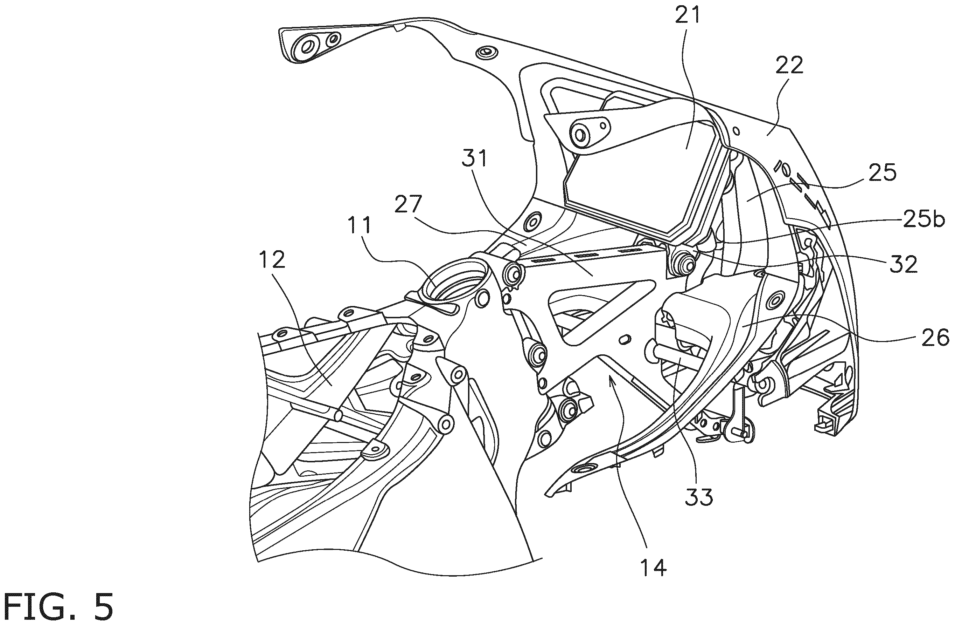

FIG. 4 is a perspective view of the main frame 12 and constituent elements of the front frame 14 and the vicinity thereof in the straddled vehicle 1. FIG. 5 is a close-up view of the front frame 14 and the vicinity thereof in FIG. 4.

The inside upper cover 25 is disposed on the rear surface side of the front cowling 22. The inside upper cover 25 is fixed to the front cowling 22. The inside upper cover 25 is disposed further on the front side than the meter unit 21. The inside lower right cover 26 is disposed on the lower side of the inside upper cover 25. The inside lower left cover 27 is disposed on the lower side of the inside upper cover 25. The inside lower right cover 26 is disposed on the right side of the inside lower left cover 27.

As shown in FIGS. 4 and 5, the front frame 14 described above includes a front main frame 31, a connecting frame 32, and a front right-and-left frame 33. The front main frame 31 extends forward from the head pipe 11. The front main frame 31 extends forward through a cutout 25b provided in the right-and-left directional middle of the inside upper cover 25 to fix the front cowling 22.

The connecting frame 32 connects the meter unit 21 to the front frame 14. As shown in FIG. 5, the connecting frame 32 is disposed on the front main frame 31 to extend forward therefrom.

The front right-and-left frame 33 extends both rightward and leftward from the front main frame 31. The front right-and-left frame 33 has a rod shape. The front right-and-left frame 33 is disposed in a lower part of the front main frame 31. The front right-and-left frame 33 is disposed on the front side of the head pipe 11.

As shown in FIG. 3, the inside lower right cover 26 and the inside lower left cover 27, both described above, are disposed to interpose the front main frame 31 therebetween in the right-and-left direction. The inside lower right cover 26 is disposed on the right side of the front main frame 31. The inside lower left cover 27 is disposed on the left side of the front main frame 31. As shown in FIG. 5, the inside lower right cover 26 and the inside lower left cover 27 are disposed on the upper side of the front right-and-left frame 33.

The inside lower right cover 26 is attached to the inside upper cover 25 and the right lateral side cowling 24 in a detachable manner. As shown in FIG. 4, the inside lower right cover 26 includes a first attachment portion 26a, a second attachment portion 26b, and a third attachment portion 26c. The inside lower right cover 26 is indirectly attached to the vehicle body frame 2 in a detachable manner through the inside upper cover 25, the front cowling 22, and the right lateral side cowling 24.

The first attachment portion 26a is disposed in the front right end of the inside lower right cover 26. The second attachment portion 26b is disposed in the front left end of the inside lower right cover 26. The third attachment portion 26c is disposed in the right rear end of the inside lower right cover 26. The first and second attachment portions 26a and 26b are attached to the lower end of the inside upper cover 25 in a detachable manner. Each of the first and second attachment portions 26a and 26b is provided with a through hole. The inside upper cover 25 is also provided with through holes in corresponding positions to the first and second attachment portions 26a and 26b. While through holes in the inside lower right cover 26 are aligned with those in the inside upper cover 25, resin rivets of a push type, for instance, are inserted into the pairs of aligned through holes, respectively, whereby the inside lower right cover 26 is made attachable to the inside upper cover 25. On the other hand, the third attachment portion 26c is attached to the right lateral side cowling 24 in a detachable manner. The third attachment portion 26c is provided with a through hole. The right lateral side cowling 24 is also provided with a through hole in a corresponding position to the third attachment portion 26c. While the through hole in the inside lower right cover 26 is aligned with that in the right lateral side cowling 24, a resin rivet of a push type, for instance, is inserted into the pair of aligned through holes, whereby the inside lower right cover 26 is made attachable to the right lateral side cowling 24. When the resin rivets, inserted into the first, second, and third attachment portions 26a, 26b, and 26c respectively, are removed therefrom, the inside lower right cover 26 is made detachable from the straddled vehicle 1.

It should be noted that the inside lower left cover 27 is configured bilaterally symmetric to the inside lower right cover 26 and includes a first attachment portion 27a, a second attachment portion (not shown in the drawings), and a third attachment portion 27c. Likewise, as seen in the attachment structure of the inside lower right cover 26, the inside lower left cover 27 is attached to the inside upper cover 25 and the left lateral side cowling 24 in a detachable manner. The inside lower left cover 27 is indirectly attached to the vehicle body frame 2 in a detachable manner through the inside upper cover 25, the front cowling 22, and the left lateral side cowling 24.

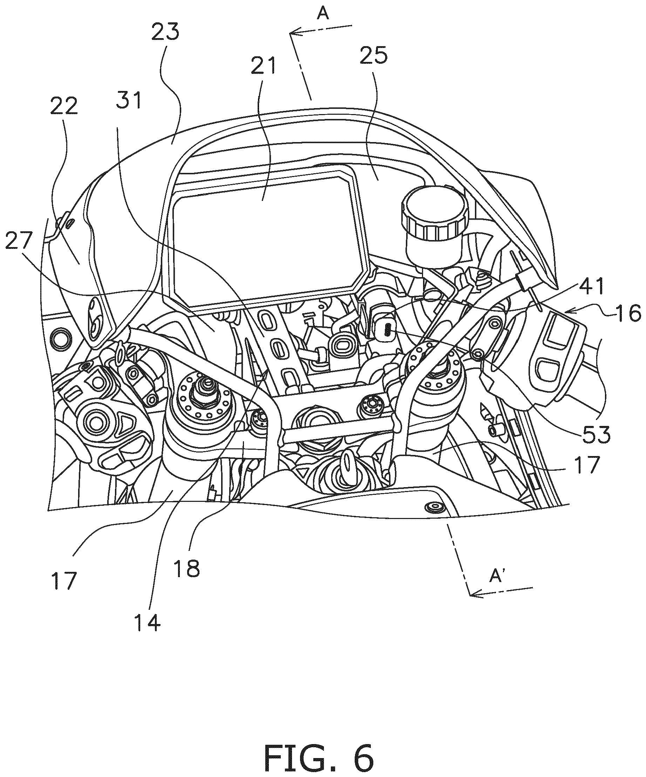

FIG. 6 is a diagram showing the handle member 16 and the vicinity thereof in a condition that the inside lower right cover 26 is detached from the straddled vehicle 1. The straddled vehicle 1 includes a USB terminal unit 41. The USB terminal unit 41 enables a cable for charging or communication to be connected thereto. When the inside lower right cover 26 is detached, the USB terminal unit 41 is exposed to the outside.

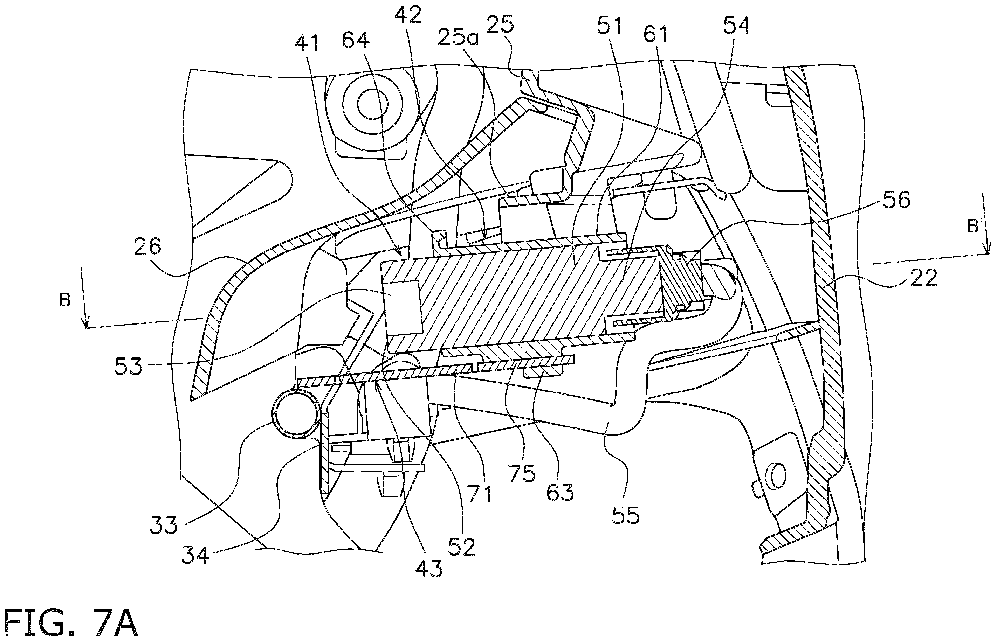

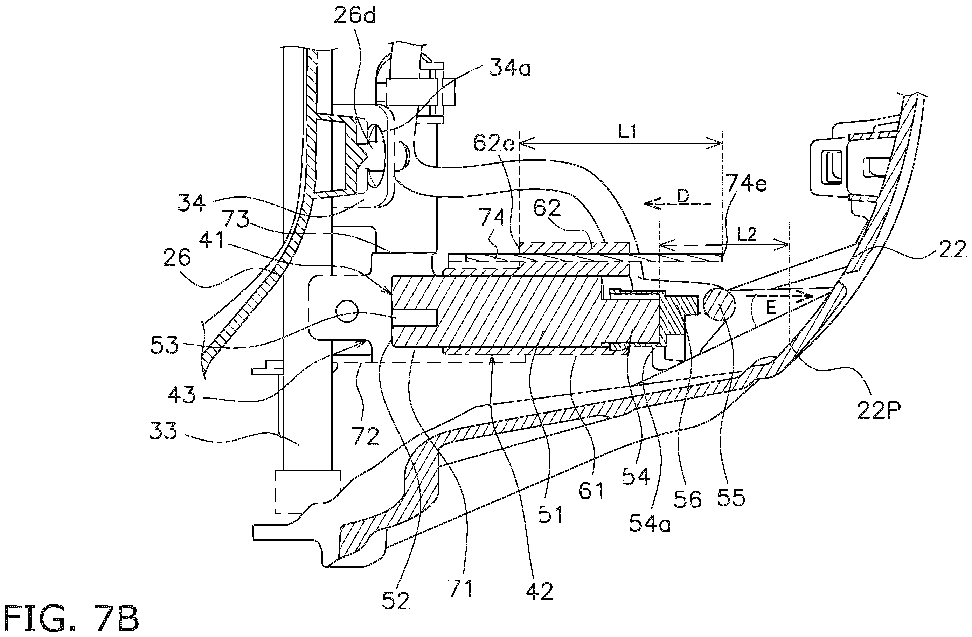

FIG. 7A is a cross-sectional side view of the USB terminal unit 41 and the vicinity thereof in the straddled vehicle 1. FIG. 7A is a cross-sectional view taken along arrow AA' in FIG. 6. FIG. 7B is a cross-sectional plan view of the USB terminal unit 41 and the vicinity thereof in the straddled vehicle 1. FIG. 7B is a cross-sectional view taken along arrow BB' in FIG. 7A.

As shown in FIGS. 7A and 7B, the USB terminal unit 41 is covered with the front cowling 22 and the inside lower right cover 26 in the back-and-forth direction. The front cowling 22 is disposed on the forward side of the USB terminal unit 41. The inside lower right cover 26 is disposed on the rearward side of the USB terminal unit 41.

As described above, when the inside lower right cover 26 is detached, the USB terminal unit 41 is exposed rearward.

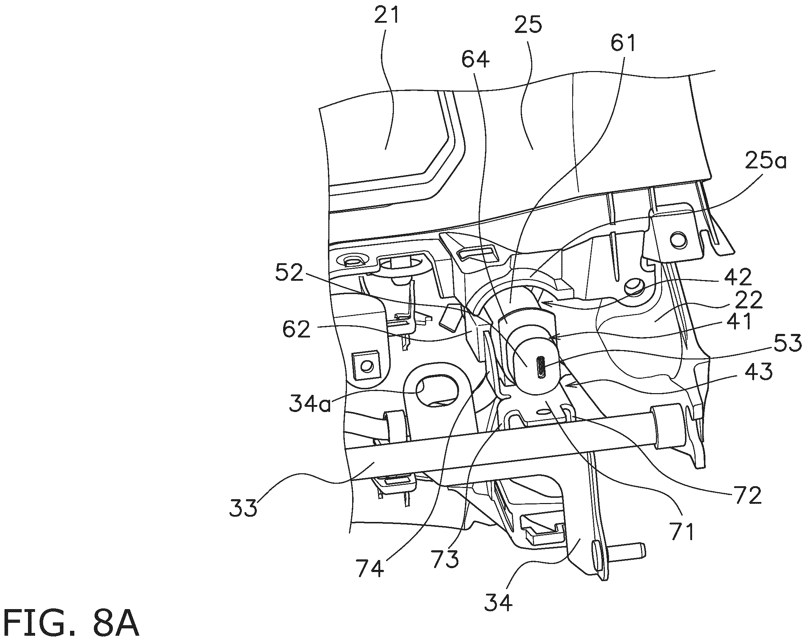

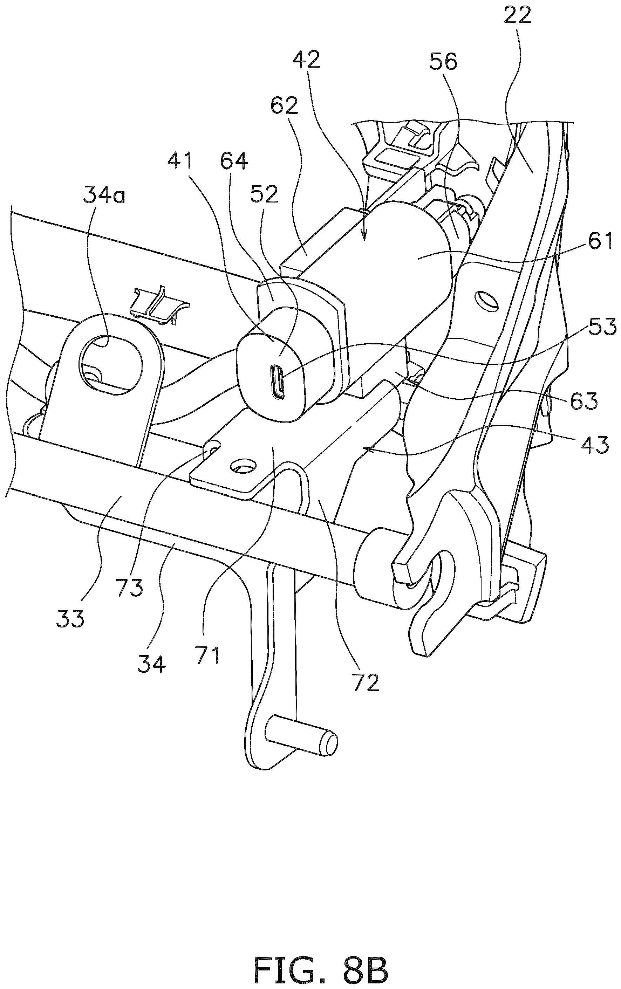

FIG. 8A is a close-up view of the USB terminal unit 41 and the vicinity thereof. In FIG. 8A, for making the drawing clearly visible, the handle member 16 and the side cowling 24 are omitted in illustration. FIG. 8B is a close-up view of the USB terminal unit 41 and the vicinity thereof. FIG. 8B is a perspective view seen from the right lateral side. In FIG. 8B. for making the USB terminal unit 41 clearly visible, the inside upper cover 25 is omitted in illustration.

The straddled vehicle 1 includes an attachment member 42 and a support frame 43. The attachment member 42 serves to attach the USB terminal unit 41 to the support frame 43. The attachment member 42 is disposed in the surroundings of the USB terminal unit 41. The support frame 43 supports the USB terminal unit 41, while being fixed to the vehicle body frame 2. As shown in FIG. 8A, the inside upper cover 25 is provided with an eave portion 25a in a lower part thereof, besides, the eave portion 25a is disposed above the attachment member 42 disposed in the surroundings of the USB terminal unit 41. The eave portion 25a is curved to protrude upward along the upper surface of the attachment member 42.

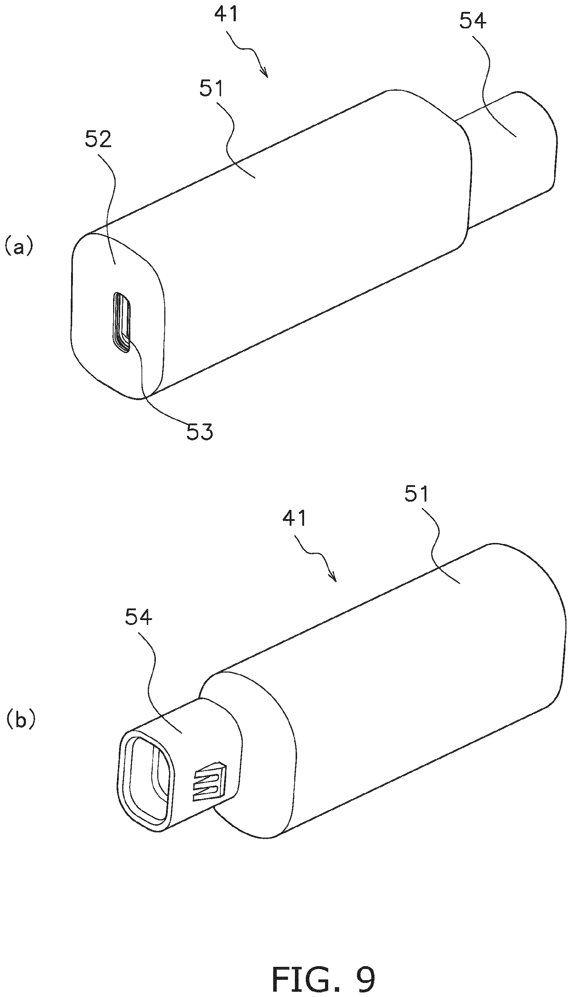

In FIG. 9, diagram (a) is a perspective view of the USB terminal unit 41 seen from the rearward side of the straddled vehicle 1. In FIG. 9, diagram (b) is a perspective view of the USB terminal unit 41 seen from the forward side of the straddled vehicle 1. The USB terminal unit 41 includes a terminal body 51, a USB port 53, and a connecting terminal 54.

The terminal body 51 has an approximately columnar shape. The terminal body 51 includes a port-perforated surface 52. The port-perforated surface 52 is a rearward end surface of the terminal body 51. The USB port 53 is perforated in the port-perforated surface 52. The USB port 53 receives a terminal of the cable for charging or communication connected thereto. For example, charging of a mobile phone is enabled by connecting the mobile phone to the USB port 53 through the cable for charging.

As shown in FIGS. 8A and 8B, the USB terminal unit 41 is disposed such that the USB port 53 faces the rearward direction. When the inside lower right cover 26 is detached, the USB port 53 is exposed to the outside, whereby the USB port 53 is made usable by a rider. The USB port 53 is of, for instance, a Type-C or a Type-A.

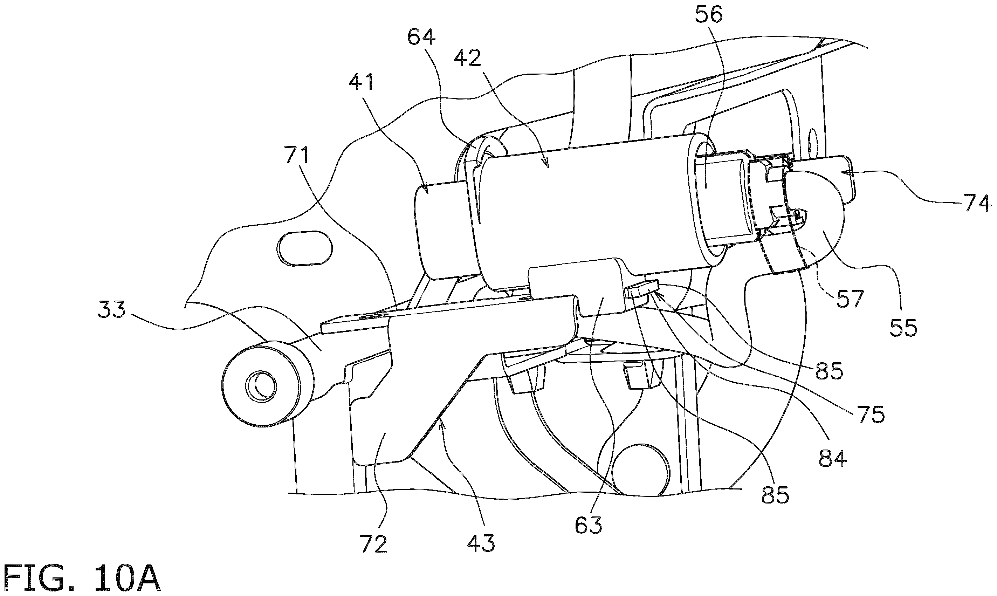

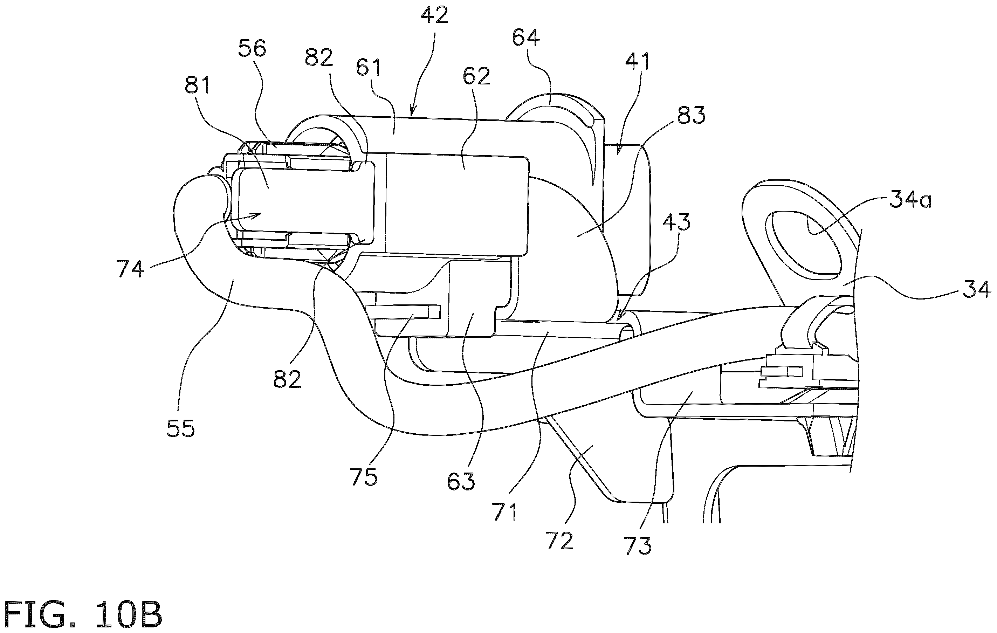

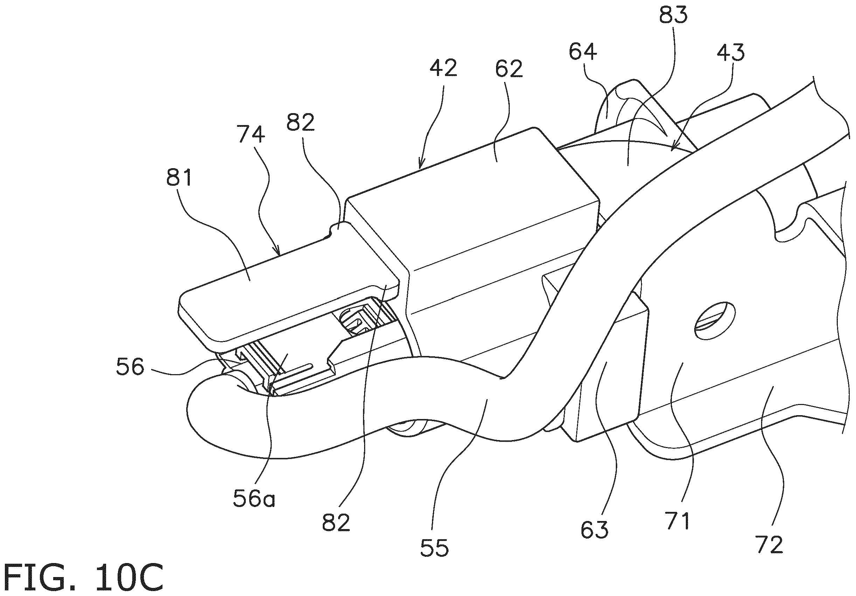

The connecting terminal 54 is disposed on an end provided on the opposite side of the port-perforated surface 52 in the terminal body 51. As shown in diagram (b) of FIG. 9, the connecting terminal 54 is disposed on the forward end of the terminal body 51. FIG. 10A is a perspective view of the USB terminal unit 41, the support frame 43, and the attachment member 42 seen from the laterally right side. FIG. 10B is a perspective view of the USB terminal unit 41, the support frame 43, and the attachment member 42 seen from the laterally left side. FIG. 10C is a perspective view of the USB terminal unit 41, the support frame 43, and the attachment member 42 seen from left below. As shown in FIGS. 10A and 10B, the connecting terminal 54 receives a connector 56 (exemplary connecting component) of a lead wire 55 supplied with electric power from a battery. As shown in FIG. 10C, the connector 56 is provided with a pawl portion 56a on the left lateral surface thereof. When the pawl portion 56a is pressed, the connector 56 is made detachable from the connecting terminal 54 of the USB terminal unit 41.

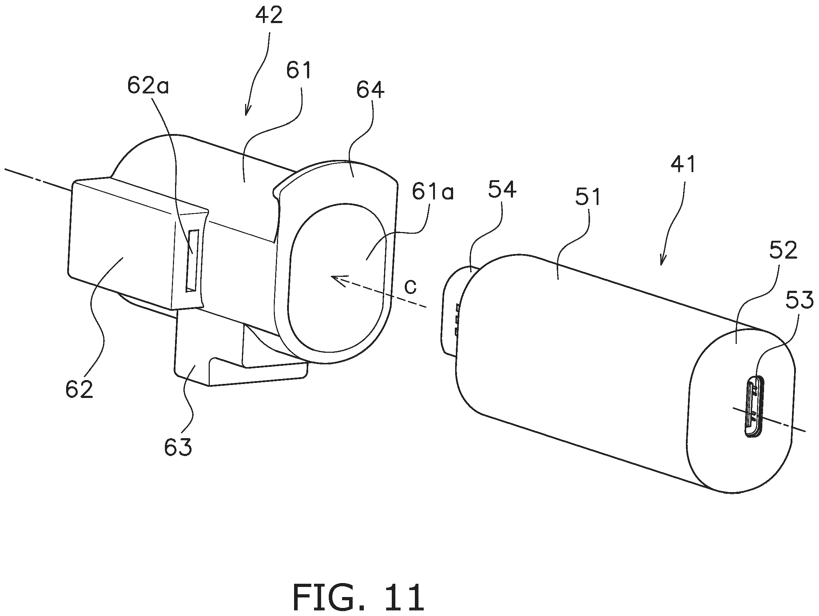

As shown in FIG. 8B, the attachment member 42 is disposed in the surroundings of the USB terminal unit 41. FIG. 11 is an exploded perspective view of the USB terminal unit 41 and the attachment member 42. By inserting the USB terminal unit 41 to the interior of the attachment member 42, the USB terminal unit 41 is made attachable to the attachment member 42. The attachment member 42 is made of, for instance, an elastic member such as rubber.

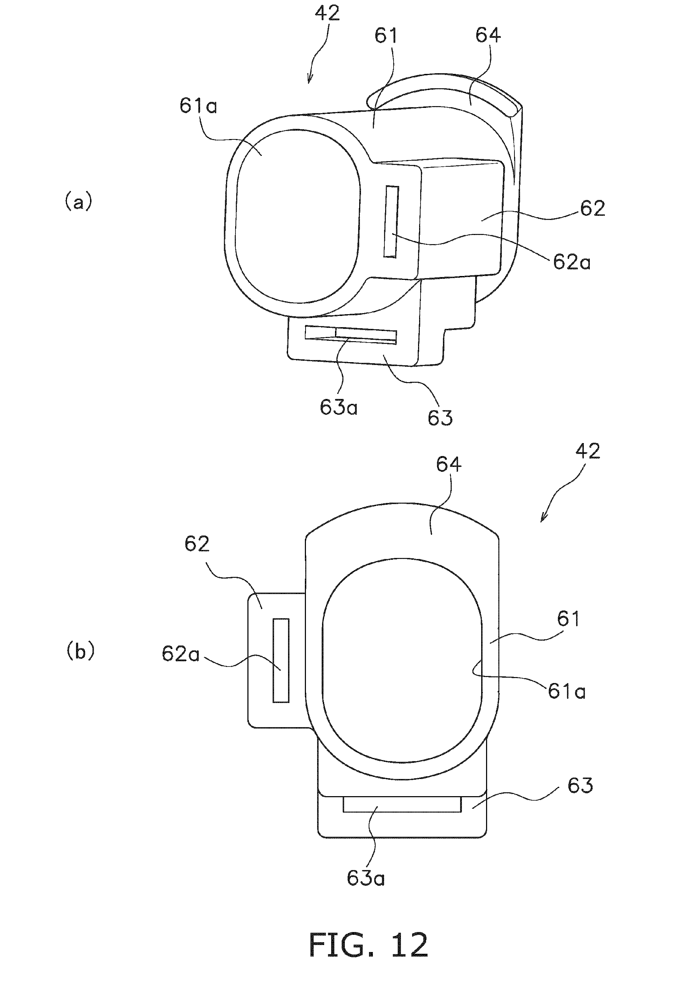

In FIG. 12, diagram (a) is a perspective view of the attachment member 42 seen from the forward side of the straddled vehicle 1. In FIG. 12, diagram (b) is an elevation view of the attachment member 42 seen from the rearward side of the straddled vehicle 1.

The attachment member 42 includes a tubular portion 61 (exemplary attachment member body), a first insertion portion 62, a second insertion portion 63, and a protruding portion 64. The tubular portion 61 has a tubular shape and is disposed in the surroundings of the terminal body 51 of the USB terminal unit 41. The tubular portion 61 includes an internal space 61a to which the terminal body 51 is inserted.

The first insertion portion 62 is disposed on the leftward side of the tubular portion 61. The first insertion portion 62 protrudes leftward from the outer peripheral surface of the tubular portion 61. The first insertion portion 62 is provided with a through hole 62a along the back-and-forth direction. The through hole 62a has a rectangular shape in the elevation view. The up-and-down direction of the through hole 62a is the lengthwise direction thereof, whereas the right-and-left direction of the through hole 62a is the crosswise direction thereof. The first insertion portion 62 receives a first support portion 74 (to be described) of the support frame 43 inserted to the through hole 62a thereof.

The second insertion portion 63 is disposed on the downward side of the tubular portion 61. The second insertion portion 63 protrudes downward from the outer peripheral surface of the tubular portion 61. The second insertion portion 63 is provided with a through hole 63a along the back-and-forth direction. As shown in diagram (b) of FIG. 12, the through hole 63a has a rectangular shape in the elevation view. The up-and-down direction of the through hole 62a is the crosswise direction thereof, whereas the right-and-left direction of the through hole 62a is the longitudinal direction thereof. The second insertion portion 63 receives a second support portion 75 (to be described) of the support frame 43 inserted to the through hole 63a thereof.

The protruding portion 64 is disposed on the upward side of the rearward end of the tubular portion 61. The protruding portion 64 protrudes upward from the outer peripheral surface of the tubular portion 61. The protruding portion 64 is provided along the circumferential direction on the outer peripheral surface of the tubular portion 61.

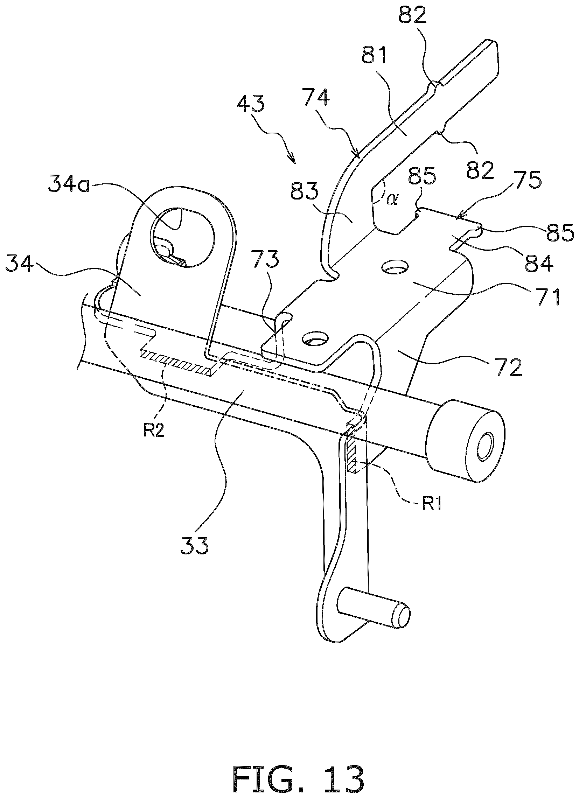

As shown in FIG. 8B, the support frame 43 is fixed to the front right-and-left frame 33. FIG. 13 is a perspective view of the support frame 43. The support frame 43 includes a base portion 71, a first fixation portion 72, a second fixation portion 73, the first support portion 74 (exemplary support portion), and the second support portion 75.

The base portion 71 has a flat plate-like shape. The base portion 71 is disposed to be approximately horizontal. The first fixation portion 72 extends rearward from the right end of the base portion 71 to be fixed to a frame member 34 fixed to the front right-and-left frame 33. The second fixation portion 73 extends rearward from the left end of the base portion 71 to be fixed to the frame member 34 fixed to the front right-and-left frame 33.

The frame member 34 is fixed to the front side of the front right-and-left frame 33. The frame member 34 includes a support portion 34a supporting the inside lower right cover 26. The support portion 34a is provided with a through hole to which a protruding portion 26d (see FIG. 7B) is inserted. The protruding portion 26d is provided in the inside lower right cover 26 to protrude forward. It should be noted that the first fixation portion 72 is fixed to the frame member 34 at a part R1 depicted with hatching in FIG. 13. The second fixation portion 73 is fixed to the frame member 34 at a part R2 depicted with hatching.

The first support portion 74 extends forward from the left end of the base portion 71. As shown in FIG. 10B, the first support portion 74 is inserted into the first insertion portion 62 of the attachment member 42. The first support portion 74 has a plate-like shape. The first support portion 74 is disposed on the front side of the second fixation portion 73.

The first support portion 74 includes a first support part 81, a pair of first retaining protrusions 82, and a connecting part 83 (exemplary restriction portion). The first support part 81 is disposed along the back-and-forth direction. The pair of first retaining protrusions 82 protrudes from the upper and lower ends of the first support part 81. The upper one of the first retaining protrusions 82 protrudes upward from the upper end of the first support part 81. The lower one of the first retaining protrusions 82 protrudes downward from the lower end of the first support part 81. As shown in FIGS. 10B and 10C, the pair of first retaining protrusions 82 is disposed on the front side of the first insertion portion 62, while the attachment member 42 is attached to the support frame 43. The first retaining protrusions 82 prevent the first insertion portion 62 of the attachment member 42 from forwardly coming off from the first support portion 74. The connecting part 83 is curved and connects the rearward end of the first support part 81 and the left end of the base portion 71. As shown in FIG. 13, the connecting part 83 is shaped such that an internal angle α of the curve thereof is about 90 degrees. When the attachment member 42 is moved rearward, the connecting part 83 restricts the rearward movement of the attachment member 42.

The second support portion 75 extends forward from the front end of the base portion 71. The second support portion 75 is inserted into the second insertion portion 63 of the attachment member 42. The second support portion 75 has a plate-like shape. The second support portion 75 is disposed on an imaginary plane on which the base portion 71 is disposed. The second support portion 75 includes a second support part 84 and a pair of second retaining protrusions 85. The second support part 84 extends forward from the base portion 71. The second support part 84 has a rectangular shape in a plan view. The pair of second retaining protrusions 85 protrudes rightward and leftward from the front end of the second support part 84. The right one of the second retaining protrusions 85 protrudes rightward from the right end of the second support part 84. The left one of the second retaining protrusions 85 protrudes leftward from the left end of the second support part 84. As shown in FIG. 10A, the pair of second retaining protrusions 85 is disposed on the front side of the second insertion portion 63, while the attachment member 42 is attached to the support frame 43. The second retaining protrusions 85 prevent the second insertion portion 63 from forwardly coming off from the second support portion 75.

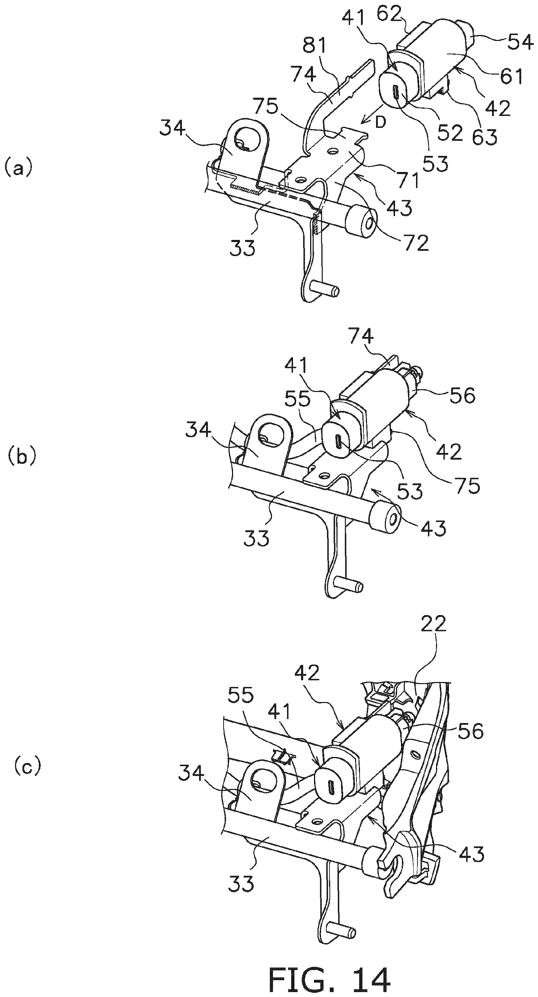

A procedure for attachment of the USB terminal unit 41 in assemblage of the straddled vehicle 1 will be hereinafter explained. FIG. 14 is composed of diagrams (a) to (c) for explaining the procedure for attachment of the USB terminal unit 41.

As shown in FIG. 11, the USB terminal unit 41 is inserted into the internal space 61a in the tubular portion 61 of the attachment member 42 (see arrow C). Accordingly, as shown in diagram (a) of FIG. 14, the attachment member 42 is attached to the surroundings of the USB terminal unit 41.

Next, as shown in diagram (a) of FIG. 14, the attachment member 42, including the USB terminal unit 41 inserted thereto, is moved rearward from the front side of the support frame 43 to be attached to the support frame 43 as indicated with an attachment direction D (exemplary first predetermined direction). The attachment direction D can be regarded as a direction oriented along the first support part 81 of the first support portion 74. The attachment direction D corresponds to the rearward direction. It should be noted that the term "correspond" herein does not mean exact correspondence between two directions but encompasses an extent of error therefrom as long as two directions are recognizable as corresponding to each other based on conventional wisdom. When described in detail, the first support part 81 of the support frame 43 is inserted into the through hole 62a of the first insertion portion 62 of the attachment member 42, whereas the second support part 84 of the support frame 43 is inserted into the through hole 63a of the second insertion portion 63 of the attachment member 42. The first support part 81 is inserted into the through hole 62a until the pair of first retaining protrusions 82 is disposed on the front side of the first insertion portion 62, whereas the second support part 84 is inserted into the through hole 63a until the pair of second retaining protrusions 85 is disposed on the front side of the second insertion portion 63. In FIG. 14, diagram (b) shows a condition that the attachment member 42, including the USB terminal unit 41 inserted thereto, has been attached to the support frame 43.

Next, as shown in diagram (b) of FIG. 14, the connector 56 of the lead wire 55 extending from the battery is attached to the connecting terminal 54 of the USB terminal unit 41. As shown in FIG. 10A, the lead wire 55 and the connector 56 are bundled by a tape 57 (exemplary bundling member). In FIG. 10A, the tape 57 is depicted with dotted line. The tape 57 is wound about both the connector 56 connected to the connecting terminal 54 and the lead wire 55 routed from the connector 56 to the front side.

Next, as shown in diagram (c) of FIG. 14, the front cowling 22 is fixed to the front frame 14 of the vehicle body frame 2. Subsequently, the inside upper cover 25 and the side cowlings 24 are attached in place; besides, the inside lower right cover 26 and the inside lower left cover 27 are attached in place in a detachable manner.

Next, explanation will be made for positional relations among the USB terminal unit 41 inserted into the attachment member 42, the support frame 43, and the front cowling 22. A direction, oriented opposite to the attachment direction D, will be indicated with a detachment direction E (exemplary second predetermined direction). The detachment direction E corresponds to the forward direction.

As shown in FIG. 7B, a relation "L1>L2" is set, where L1 is defined as a length along the attachment direction D from a forward end 62e of the first insertion portion 62 of the attachment member 42 to a detachment direction E-side end 74e of the first support portion 74, while L2 (exemplary predetermined interval) is defined as a length along the detachment direction E from a detachment direction E-side end 54a of the connecting terminal 54 of the USB terminal unit 41 to a position 22P in the front cowling 22.

In the straddled vehicle 1 according to the present preferred embodiment explained above, even when it is attempted to pull out the USB terminal unit 41 together with the attachment member 42 from the support frame 43 in the detachment direction E for the purpose of, for instance, stealing the USB terminal unit 41, the lead wire 55 and the connector 56 thereof connected to the connecting terminal 54 are supposed to be contacted to the front cowling 22 before the USB terminal unit 41 is pulled out. Because of this, it is made possible to inhibit the USB terminal unit 41 from being detached in the detachment direction E.

Besides, even when the USB terminal unit 41 is pulled out rearward from the attachment member 42, the connector 56 and the lead wire 55 are bundled by the tape 57 as shown in FIG. 10A; hence, the connector 56 and the lead wire 55 interfere with the attachment member 42, whereby the USB terminal unit 41 can be inhibited from being pulled out.

Incidentally, it can be assumed to detach the connector 56 from the USB terminal unit 41 for the purpose of stealing the USB terminal unit 41; however, as shown in FIG. 10C, the connector 56 is covered with the first support portion 74 from the pawl portion 56a side (the leftward side); hence, the connector 56 can be inhibited from being detached.

Moreover, as shown in FIG. 8A, the front cowling 22 is disposed on the rightward side of the USB terminal unit 41; the eave portion 25a is disposed on the upward side of the USB terminal unit 41; the support frame 43 is disposed below the USB terminal unit 41. Thus, constituent members are disposed in the surroundings of and on all the directional sides of the USB terminal unit 41; hence, it is made difficult to insert a tool, a hand, and/or so forth into the place that the USB terminal unit 41 is disposed, whereby theft of the USB terminal unit 41 can be inhibited.

Suppose the connector 56 has been detached from the USB terminal unit 41. In this case, the relation "L1>L2" is set; hence, even when it is attempted to pull out the USB terminal unit 41 together with the attachment member 42 from the support frame 43 in the detachment direction E, the connecting terminal 54 is supposed to be contacted to the front cowling 22 before the USB terminal unit 41 is pulled out. Because of this, the USB terminal unit 41 can be inhibited from being detaching in the detachment direction E.

One preferred embodiment of the present invention has been explained above. However, the present invention is not limited to the preferred embodiment described above, and a variety of changes can be made without departing from the gist of the present invention.

The USB terminal unit 41 is contacted to the front cowling 22 before detached from the support frame 43 along the detachment direction E; however, the object herein contacted by the USB terminal unit 41 may not be limited to the front cowling 22. For example, before detached from the support frame 43 along the detachment direction E, the USB terminal unit 41 may be contacted to any suitable exterior cover other than the front cowling 22. Alternatively, the object herein contacted by the USB terminal unit 41 may not be limited to the exterior cover and may be the meter unit 21, a meter bracket, or so forth. Namely, any suitable equipment member may be used as the object herein contacted by the USB terminal unit 41 as long as the vehicle body frame 2 is equipped with the equipment member.

The attachment direction D, in which the USB terminal unit 41 is attached to the support frame 43, corresponds to the rearward direction, whereas the detachment direction E, in which the USB terminal unit 41 is detached from the support frame 43, corresponds to the forward direction; however, directional settings for the attachment and detachment directions D and E may not be limited to the above. For example, the attachment direction D may correspond to the leftward direction, whereas the detachment direction E may correspond to the rightward direction. In this case, before detached from the support frame 43, the USB terminal unit 41 is contacted to an equipment member (e.g., the front cowling 22, the side cowling 24, or so forth) disposed on the rightward side, whereby theft of the USB terminal unit 41 can be inhibited.

The USB terminal unit 41 with the USB port 53 is installed in the straddled vehicle 1; however, the type of port provided in the USB terminal unit 41 may not be limited to the USB.

The USB terminal unit 41 is disposed on the right side of the right-and-left directional middle; alternatively, the USB terminal unit 41 may be disposed on the left side of the right-and-left directional middle. For example, the USB terminal unit 41 may be disposed on the front side of the inside lower left cover 27.

The inside lower right cover 26 is indirectly fixed to the vehicle body frame 2 through the inside upper cover 25 and the side cowling 24; however, the inside lower right cove 26 may be directly fixed to the vehicle body frame 2.

The support frame 43 is fixed to the front right-and-left frame 33 through the frame member 34; however, the support frame 43 may be directly fixed thereto without through the frame member 34.

The tape 57 is wound about the connector 56 and the lead wire 55; however, the member to be wound thereabout may not be limited to the tape 57. Instead, a bundling band or so forth may be used as the member. Namely, any suitable member may be used as long as the connector 56 and the lead wire 55 can be bundled by the member.

As described above, when the USB terminal unit 41 is pulled out rearward from the attachment member 42, both the connector 56 and the lead wire 55, about which the tape 57 is wound, interfere with the attachment member 42. However, the configuration for interfering with the attachment member 42 may not be limited to the above. For example, the connector 56 may be configured to interfere with the attachment member 42.

The USB terminal unit 41 includes the connecting terminal 54; besides, the connector 56 of the lead wire 55 is directly attached to the USB terminal unit 41. However, the configuration for connection between the USB terminal unit 41 and the lead wire 55 may not be limited to the above. For example, a lead wire may extend from the USB terminal unit 41; besides, the lead wire may be provided with a connecting terminal on the distal end thereof to be connected to the connector 56 of the lead wire 55 extending from the battery.

In the USB terminal unit 41, the USB port 53 is exposed to the outside; alternatively, the USB terminal unit 41 may be provided with a cap for covering the USB port 53.

The connecting part 83 is shaped such that the internal angle α of the curve thereof is about 90 degrees (see FIG. 13) and restricts the rearward movement of the attachment member 42. However, the connecting part 83 may not be limited in shape to this as long as the connecting part 83 can restrict the rearward movement of the attachment member 42. When the rearward movement of the attachment member 42 is restricted by the curve of the connecting part 83, it is preferred to set the internal angle α of the curve of the connecting part 83 to be at least less than or equal to 135 degrees. Alternatively, the rearward movement of the attachment member 42 may be restricted by enlarging the connecting part 83 than the first insertion portion 62 not by forming the connecting part 83 in the curved shape.

### INDUSTRIAL APPLICABILITY

According to the present invention, it is made possible to achieve an advantageous effect that a terminal unit is enabled to be disposed in a user-friendly state in a straddled vehicle, while theft thereof is inhibited.

### REFERENCE SIGNS LIST

1: Straddled vehicle, 22: Front cowling, 41: USB terminal unit, 42: Attachment member, 62: First insertion portion, 62e: End, 74: First support portion, 74e: End

## Claims

1. A straddled vehicle (1) comprising:
a terminal unit (41) enabling a terminal of a cable for charging or communication to be connected thereto;
a support portion (74) shaped along a first predetermined direction, the support portion (74) supporting the terminal unit (41);
an attachment member (42) disposed in surroundings of the terminal unit (41), the attachment member (42) attaching the terminal unit (41) to the support portion (74), the attachment member (42) including an insertion portion (62) to which the support portion (74) is inserted along the first predetermined direction; and
an equipment member (22, 24) disposed away from an end (54a) of the terminal unit (41) at a predetermined interval (L2) in a second predetermined direction oriented opposite to the first predetermined direction, wherein
the predetermined interval (L2) is shorter than a length (L1) from a first predetermined directional end (62e) of the insertion portion (62) to a second predetermined directional end (74e) of the support portion (74).

2. The straddled vehicle according to claim 1, wherein the equipment member (22, 24) is an exterior cover.

3. The straddled vehicle according to claim 2, wherein
the terminal unit (41) is disposed such that a port thereof faces a rearward direction, the port enabling the terminal of the cable to be connected thereto,
the end of the terminal unit (41) is an end thereof facing a forward direction,
the exterior cover is a front cowling (22),
the first predetermined direction is the rearward direction, and
the second predetermined direction is the forward direction.

4. The straddled vehicle according to claim 1, wherein
the terminal unit (41) is a USB terminal unit, and
the terminal unit (41) includes a USB port (53) enabling the terminal of the cable to be connected thereto.

5. The straddled vehicle according to claim 1, further comprising:
a connecting component (55, 56) connected to the end of the terminal unit (41), the connecting component (55, 56) interfering with the attachment member (42) when the terminal unit (41) is moved in the first predetermined direction with respect to the attachment member (42).

6. The straddled vehicle according to claim 5, wherein
the connecting component (55, 56) includes
a connector (56) connected to the end of the terminal unit (41), and
a lead wire (55) connected to the connector (56),
the connector (56) and the lead wire (55) are bundled by a bundling member (57), and
the lead wire (55) interferes in part with the attachment member (42) when the terminal unit (41) is moved in the first predetermined direction with respect to the attachment member (42).

7. The straddled vehicle according to claim 1, wherein the support portion (74) includes a restriction portion (83), the restriction portion (83) restricting the attachment member (42) from moving in the first predetermined direction.

8. The straddled vehicle according to claim 1, further comprising:
a handle (16);
a seat (5) disposed on a rearward side of the handle (16); and
a fuel tank (4) disposed between the seat (5) and the handle (6), wherein
the terminal unit (41) is disposed on a forward side of the handle (6) when the handle is not being steered.

9. The straddled vehicle according to claim 1, wherein
the terminal unit (41) includes a port (53), the port (53) enabling the terminal of the cable to be connected thereto, the straddled vehicle (1) further comprising:
a cover member (27) disposed in opposition to the equipment member (22, 24), the cover member disposed to cover the terminal unit (41) from a port side, the cover member (27) being attachable to and detachable from a vehicle body frame.

10. The straddled vehicle according to claim 1, further comprising:
an eave portion (25a) disposed on an upward side of the attachment member (42), wherein
the eave portion (25a) is curved along an upper surface of the attachment member (42).

11. The straddled vehicle according to claim 1, wherein the attachment member (42) further includes
an attachment member body provided such that the insertion portion is disposed outside thereof, the attachment member body enclosing the terminal unit (41) from the surroundings of the terminal unit (41), and
a protruding portion protruding upward, the protruding portion disposed on a first predetermined directional end of the attachment member body.
